# EUROPEAN PATENT APPLICATION

(11) **EP 4 741 207 A1**
(43) Date of publication of application: **13.05.2026**
(21) Application number: 24211486.6
(22) Date of filing: 07.11.2024
(51) Int. Cl.: B60L 1/00, B60L 58/14, B60W 50/00, B60W 50/14

(54) **CONTROL ARRANGEMENT AND METHOD FOR CONTROLLING A VEHICLE IN CONJUNCTION WITH USAGE OF A POWER TAKE-OFF**

(71) Applicant: Scania CV AB, 151 87 Södertälje (SE)
(72) Inventor: BERGVALL, Jimmy, 645 97 Stallarholmen (SE)
(74) Representative: Scania CV AB

(57) **Abstract**

A control arrangement (100) and a method for controlling a vehicle (1) in conjunction with usage of a power take-off (11, 12) of the vehicle (1). The vehicle (1) comprises a powertrain (2) configured to power the power take-off (11, 12), and an energy storage device (10) configured to power the powertrain (2). The method comprises determining (S102) a first state of charge threshold for the energy storage device (10) based on map data, said first state of charge threshold corresponding to a minimum state of charge sufficient for the vehicle (1) to reach a e.g., a predefined charging station or a nearest charging station. Optionally, the method further comprises determining (S103) a second state of charge threshold based on the first state of charge threshold. The method may further comprise activating (S105) a limitation of allowable power supply to the power take-off (11, 12) when a state of charge of the energy storage device (10) reaches the optional second state of charge threshold, and/or interrupting (S107) power supply to the power take-off (11, 12) when the state of charge of the energy storage device (10) reaches the first state of charge threshold.

## Description

### TECHNICAL FIELD

The present disclosure relates in general to a method for controlling a vehicle in conjunction with usage of a power take-off of the vehicle. The present disclosure also relates in general to a control arrangement configured to control a vehicle in conjunction with usage of a power take-off of the vehicle.

The present disclosure also relates in general to a computer program, a computer-readable medium, and a vehicle.

### BACKGROUND

Vehicles may be equipped with one or more power take-offs (PTOs), each allowing a possible auxiliary device of the vehicle to be powered by means of the vehicle's powertrain. Examples of such auxiliary devices include various pumps, cranes, mixers, compressors, etc.. Operation of one or more such auxiliary devices consumes part of the available propulsion energy stored onboard the vehicle (e.g., as fuel and/or electrical energy) and therefore also affects the vehicle's driving range.

The efforts within the automotive industry to reduce the environmental impact has led to an increase in the number of heavy-duty vehicles that are electrified at least in part. Examples of such vehicles include battery electric vehicles, which are fully electrified, and parallel or series plug-in hybrid vehicles, which are only partly electrified. Furthermore, vehicles comprising a plurality of independent powertrains of which at least one is fully electric are developed. An example of such a vehicle is a vehicle comprising a first powertrain comprising a conventional combustion engine and a second powertrain in the form of an electric drive axle (also known as an e-Axle). One of the greatest concerns associated with electrification of heavy-duty vehicles is the limited driving range that may be achieved on stored electrical energy, which in turn is a result of the energy storage device that may reasonably be arranged onboard the vehicle in terms of e.g., size and weight thereof. An auxiliary device, connected to an electric powertrain via a power take-off, would inherently lead to a further limitation of the driving range in view of consuming part of the stored electrical energy.

It may be quite difficult for a driver to estimate how the operation of a power take-off (PTO), for the purpose of driving an auxiliary device of the vehicle, affects the remaining possible driving range of the vehicle. In many cases, the PTO may be operated while the vehicle is at standstill and with the driver working outside the driver's cabin. This could for example be the case when operating a crane of a timber truck to load timber onto the vehicle, when controlling the drum's rotation and operating a chute (and/or pump) during pouring of concrete from a concrete truck, or when operating a pump of a vacuum truck for suction of sludge or the like from a site. The difficulties in estimating the driving range that may remain after a certain time of PTO usage may cause the driver to choose to end the usage of the PTO early to ensure that the vehicle may be safely driven to a charging station. This may in turn cause unnecessary disruptions in the operation of the auxiliary device, and/or may increase the down-time of the vehicle as such for having to drive to a charging station more often. Furthermore, the driver needs to regularly check the state of charge of the energy storage device to determine when to interrupt the PTO work, which may cause annoyance and anxiety.

It has previously been proposed to overcome this issue by estimating a distance-to-empty (i.e. how far the vehicle may be driven given the available stored energy) taking into account a predicted power consumption of the PTO, and presenting this to a driver in the instrument cluster of the vehicle. However, a vehicle manufacturer is typically not aware of which auxiliary device(s) a customer, a body builder or a user of the vehicle intends to connect to the vehicle powertrain. It is therefore very difficult to accurately predict power consumption of the PTO (in particular a future power consumption of the PTO, as well as duration of use), especially in case the PTO is operated when the vehicle is at standstill. This in turn naturally affects the accuracy of the information presented to the driver. Furthermore, the driver may still need to interrupt his work on a regular basis to check whether the information previously presented to him has been updated.

### SUMMARY

The object of the present invention is to provide assistance to an operator of the vehicle for the purpose of reducing the risk that operation of a power take-off of the vehicle may lead to a situation where the vehicle may not be driven to a desired destination due to an insufficient charge of the energy storage device of the vehicle.

The object is achieved by the subject-matter of the appended independent claim(s).

The present disclosure relates to a method, performed by a control arrangement, for controlling a vehicle in conjunction with usage of a power take-off of the vehicle. Said vehicle comprises a powertrain configured to provide motive power to one or more drive wheels of the vehicle and to power the power-take off. The vehicle further comprises an energy storage device configured to power the powertrain. The method comprises determining a first state of charge threshold for the energy storage device based on map data, said first state of charge threshold corresponding to a minimum state of charge sufficient for the vehicle to reach a predefined charging station, at least one nearest charging station, or a geographical position at which the vehicle may be driven using an energy source other than the energy storage device. The method may optionally further comprise determining a second state of charge threshold based on the first state of charge threshold, said second state of charge threshold being higher than the first state of charge threshold. Moreover, unless an optional third state of charge threshold is applied in response to a user-initiated request therefore, the method further comprises:
- when a state of charge of the energy storage device reaches the optional second state of charge threshold, activating a limitation of allowable power supply from the powertrain to the power take-off and/or communicating, using a user interface, a warning message to an operator of the vehicle, and/or
- when the state of charge of the energy storage device reaches the first state of charge threshold, interrupting power supply from the powertrain to the power take-off.

The herein described method provides an operator of the vehicle with a protection against consuming too much of the stored electrical energy, when operating an auxiliary device powered by a power take-off of the vehicle, such that it may prevent the vehicle from reaching a geographic location at which the vehicle may be recharged, or, if applicable, driven using another energy source than the energy storage device. Thus, the herein described method allows the driver to calmly work with an auxiliary device powered via power take-off without worrying about the continued travel of the vehicle after finished work, even if working outside of the vehicle when operating the power take-off. This also allows the driver to optimize the power take-off work by avoiding unnecessary interruptions e.g., for checking a current state of charge of the energy storage device and/or unnecessary travel to a charging station, followed by charging time, to ensure that the energy storage device maintains an appropriate state of charge. This in turn also contributes to a reduction of operational costs of the vehicle as well as labor costs for the operator.

A key factor in the present method is the usage of map data when determining the above mentioned first state of charge threshold. Usage of map data significantly increases the accuracy when determining the energy needed for the vehicle to reach a desired destination compared to, for example, relying on average energy consumption of the vehicle per kilometer. Furthermore, map data also allows for identifying relevant charging stations and/or geographical locations where the vehicle may be driven using an alternative energy source. Therefore, usage of map data also increases the accuracy when determining the state of charge that needs to be reserved in the energy storage device for the vehicle to reach such a destination, i.e. the first state of charge threshold. In the present case, the destination is a geographic position at which the operation of the vehicle is no longer limited by the state of charge of the energy storage device at the point in time when the travel towards said destination is initiated. Depending on the particular circumstances (such as vehicle configuration and/or selections made by the operator of the vehicle), said destination is either a predefined charging station, at least one nearest charging station, or a geographical position at which the vehicle may be driven (i.e. propelled) using an energy source other than the energy storage device.

The herein method may further comprise, in response to a user-initiated request for the third state of charge threshold, activating said third state of charge threshold. Thereby, the third state of charge will be applied when the herein described method is executed. In such a case, the method may further comprise, when the state of charge of the energy storage device reaches said third state of charge threshold, either (i) interrupting power supply from the powertrain to the power take-off, or (ii) activating a limitation of allowable power supply from the powertrain to the power take-off and/or communicating, using the user interface, a warning message to the operator of the vehicle. Among other things, this allows the operator of the vehicle to take advantage of the benefits of the herein described method but at the same time select a state of charge threshold that he is comfortable with given the particular circumstances. It thus increases the flexibility for the operator of the vehicle.

The above described determination of the first state of charge threshold may suitably be performed taking into account a predicted future vehicle load or a predefined maximum allowable vehicle load. This may further increase the accuracy in the determination of the first state of charge threshold, and thus also an improved protection against the operator using the PTO to such an extent that the vehicle may not reach e.g., a charging station.

The herein described method may be performed while the vehicle is at standstill. This is because the herein described method is particularly advantageous in situations where the power take-off is operated while the vehicle is at standstill. In such cases, it is especially difficult for a vehicle manufacturer to accurately predict the power consumption of the power take-off, and consequently it may not be possible to, for example, accurately predict a so called distance-to-empty for the purpose of assisting the operator to determine when to interrupt the operation of the power take-off. Moreover, in many cases, auxiliary devices that may be powered by a power take-off of the vehicle may be used only while the vehicle is at standstill, and the operator may often in such cases be working outside of the vehicle. This may in turn mean that the operator may not easily determine when the PTO work needs to be interrupted in order to allow the vehicle to reach e.g., a charging station.

Moreover, the method may be performed in response to a user-initiated request therefore. Among other things, this allows the operator of the vehicle to select whether to take advantage of the herein described method or not.

The method may further comprise, when the power take-off is activated, predicting a duration of possible use of the power take-off until the state of charge of the energy storage device reaches the first state of charge threshold, the optional second state of charge threshold, and/or the third state of charge threshold. In such a case, the method may also comprise communicating, using the user interface, the predicted duration(s) of possible use to the operator of the vehicle. This may further assist the operator to obtain a better understanding of when the PTO work may need to be interrupted to allow the vehicle to reach the predefined charging station, one or more of the nearest charging stations, or a geographical position at which the vehicle may be driven using an energy source other than the energy storage device.

The present disclosure also relates to a control arrangement configured to control a vehicle in conjunction with usage of a power take-off of the vehicle. Said vehicle comprises a powertrain configured to provide motive power to one or more drive wheels of the vehicle and to power the power-take off. The vehicle further comprise an energy storage device configured to power the powertrain. The control arrangement is configured to determine a first state of charge threshold for the energy storage device based on map data, said first state of charge threshold corresponding to a minimum state of charge sufficient for the vehicle to reach a predefined charging station, at least one nearest charging station, or a geographical position at which the vehicle may be driven using an energy source other than the energy storage device. The control arrangement may optionally further be configured to determine a second state of charge threshold based on the first state of charge threshold, said second state of charge threshold being higher than the first state of charge threshold. The control arrangement is further configured to, unless an optional third state of charge threshold is applied in response to a user-initiated request therefore:
- activate a limitation of allowable power supply from the powertrain to the power take-off when a state of charge of the energy storage device reaches the optional second state of charge threshold, and/or
- communicating, using a user interface, a warning message to an operator of the vehicle when a state of charge of the energy storage device reaches the optional second state of charge threshold, and/or
- interrupt power supply from the powertrain to the power take-off when the state of charge of the energy storage device reaches the first state of charge threshold.

The control arrangement provides the same advantages as described above with regard to the corresponding method for controlling a vehicle in conjunction with usage of a power take-off of the vehicle.

The control arrangement may further be configured to, in response to a user-initiated request for the optional third state of charge threshold, activate said third state of charge threshold. In such a case, the control arrangement may also be configured to, when the state of charge of the energy storage device reaches said third state of charge threshold, either (i) interrupt power supply from the powertrain to the power take-off, or (ii) active a limitation of allowable power supply from the powertrain to the power take-off and/or communicate, using the user interface, a warning message to the operator of the vehicle.

The control arrangement may be configured to determine the first state of charge threshold taking into account a predicted future vehicle load or a predefined maximum allowable vehicle load.

The control arrangement may further be configured to, when the power take-off is activated, predict a duration of possible use of the power take-off until the state of charge of the energy storage device reaches the first state of charge threshold, the optional second state of charge threshold, and/or the optional third state of charge threshold. In such a case, the control arrangement may also be configured to communicate, using the user interface, the predicted duration(s) of possible use to the operator of the vehicle.

The present disclosure also relates to a computer program comprising instructions which, when executed by a control arrangement as described above, cause the control arrangement to carry out the method for controlling a vehicle in conjunction with usage of a power take-off as described above.

The present disclosure also relates to a computer-readable medium having stored thereon a computer program as described above.

The present disclosure also relates to a vehicle. The vehicle comprises a first powertrain, said first powertrain being configured to provide motive power to one or more drive wheels of the vehicle. The vehicle also comprises an energy storage device configured to power the first powertrain. Furthermore, the vehicle comprises a power take-off configured to be powered by the first powertrain. Moreover, the vehicle comprises the above described control arrangement configured to control a vehicle in conjunction with usage of a power take-off the vehicle.

The vehicle may for example be a battery electric vehicle. In such cases, the vehicle may only use electrical energy stored in an energy storage device of the vehicle for the purpose of propulsion of the vehicle since no other energy source is available. A battery electric vehicle typically has a limited driving range, which means that it is very important to safeguard that the vehicle may always reach a charging station to allow it to be recharged.

Alternatively, the vehicle may, in addition to the first powertrain, further comprise a second powertrain configured to provide motive power to one or more drive wheels of the vehicle. Said second powertrain is mechanically separated from the first powertrain and is configured to be powered by an energy source other than the energy storage device. Such an energy source may for example be a combustion engine. When the vehicle comprises said first and second powertrains, the vehicle may be electrically driven (using the first powertrain) and/or driven using the second powertrain (in which case it is not dependent on the state of charge of the energy storage device) depending on the circumstances.

The vehicle may be a land-based heavy-duty vehicle. Alternatively, the vehicle may be land-based medium-duty vehicle.

### BRIEF DESCRIPTION OF DRAWINGS

- Fig. 1: schematically illustrates a first example of a vehicle;
- Fig. 2: schematically illustrates an example of a powertrain of a vehicle;
- Fig. 3: schematically illustrates a second example of a vehicle;
- Fig. 4: represents a flowchart schematically illustrating a first exemplifying embodiment of the herein described method for controlling a vehicle in conjunction with usage of a power take-off of the vehicle; and
- Fig. 5: schematically illustrates an exemplifying embodiment of a device which may comprise, consist of, or be comprised in the herein described control arrangement for controlling a vehicle in conjunction with usage of a power take-off of the vehicle.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

In the present disclosure, the terms "auxiliary device" and "auxiliary power consumer" are used interchangeably and should therefore be considered to have the same meaning.

The present disclosure relates to a method, performed by a control arrangement, for controlling a vehicle in connection with usage of a power take-off (PTO) of the vehicle. Said vehicle comprises a powertrain configured to provide motive power to one or more drive wheels of the vehicle. In most cases, the powertrain is configured to provide motive power to a set of drive wheels, i.e. a plurality of drive wheels of the vehicle. The powertrain is further configured to power one or more power take-offs of the vehicle. The vehicle further comprises an energy storage device configured to power the powertrain. More specifically, the energy storage device may be configured to power one or more electrical machines, each serving as a power unit, of the powertrain. The energy storage device may typically comprise, or consist of, one or more battery packs. Such battery packs may in turn comprise a plurality of battery modules, each comprising a plurality of battery cells. It should however be noted that the present disclosure is not limited to any particular configuration of the energy storage device as long as it may store electrical energy.

As previously mentioned, the present disclosure relates to a method for controlling a vehicle in connection with usage of a power take-off of the vehicle. In other words, the present method is performed when a power take-off of the vehicle is operated to power an auxiliary power consumer (which may alternatively be referred to as an auxiliary device herein) of the vehicle and/or when it is intended that this will be performed within short. The method may for example be initiated when the power take-off is activated so as to power an auxiliary power consumer. Examples of auxiliary power consumers include various pumps, cranes, mixers, compressors, or the like, but are not limited thereto.

The herein described method is intended to assist an operator (for example a driver) of the vehicle for the purpose of avoiding that operation of a power take-off leads to a situation where the energy storage device is discharged to such a state of charge (SOC) that the vehicle may not reach, for example, a charging station at which it may be recharged. For this purpose, the present method utilizes a first state of charge threshold, and optionally also a second state of charge threshold and/or a third state of charge threshold, for the energy storage device as will be further described below. It should here be noted that each of the first state of charge threshold and the optional second state of charge threshold is a threshold determined by the control arrangement configured to perform the herein described method. In contrast, the optional third state of charge threshold is a threshold selected by the operator of the vehicle. In other words, the third state of charge threshold, when present, is included to allow the operator of the vehicle to freely select a threshold that he feels comfortable with based on the prevailing circumstances. Thus, the third state of charge threshold may be higher, equal to, or lower than any one of the first state of charge threshold and the optional second state of charge threshold.

The herein described method for controlling a vehicle in conjunction with usage of a power take-off of the vehicle comprises a step of determining a first state of charge threshold for the energy storage device in consideration of map data (including topographical data) and the geographical position of the vehicle. The first state of charge threshold corresponds to a minimum state of charge sufficient for the vehicle to reach a geographical position at which the operation of the vehicle is no longer limited by the current state of charge of the energy storage device (i.e. the state of charge prevailing at the time the step of determining the first stage of charge threshold is performed). Thus, the first state of charge threshold may correspond to a minimum state of charge sufficient for the vehicle to reach a predefined charging station, if such a predefined charging station is known. This may for example be the case when the operator of the vehicle has defined a route for the vehicle in advance, such as in a route planning system or the like, or in any other way has selected an upcoming charging station in a manner that may be recognized by the control arrangement. Alternatively, the first state of charge threshold may correspond to a minimum state of charge sufficient for the vehicle to reach the nearest charging station, or each of the two or three nearest charging stations, as given by the map data. This may for example be used in case an upcoming charging station has not been predefined by the operator of the vehicle. According to yet an alternative, the first state of charge threshold may correspond to a minimum state of charge sufficient for the vehicle to reach a geographical position at which the vehicle may be driven using an energy source other than the energy storage device. This may for example be the case in situations where the vehicle may not be allowed to use an energy source other than the energy storage device when present within certain geographical areas (for example urban areas with certain environmental restrictions) but is equipped with e.g., a combustion engine that may be used as soon as the vehicle leaves such geographical areas. The geographical position at which the vehicle may be driven using an energy source other than the energy storage device may be given by the map data.

The method may optionally further comprise a step of determining a second state of charge threshold based on the first state of charge threshold, said second state of charge threshold being higher than the first state of charge threshold. The second state of charge threshold may for example correspond to the first state of charge threshold plus a percentage of the first state of charge threshold (such that the second state of charge threshold is for example 110%, 115%, or 120% of the first state of charge threshold). Alternatively, the second state of charge threshold may correspond to the first state of charge threshold plus a preselected percentage of maximum state of charge of the energy storage device (such that the second state of charge threshold for example corresponds to the first state of charge threshold plus 10% SOC, 15% SOC or 20% SOC).

In case the method comprises the above described optional step of determining the second state of charge threshold, the method also comprises (unless the above described optional third state of charge threshold is applied due to a user-initiated request therefore) a step of activating a limitation of allowable power supply from the powertrain to the power take-off and/or a step of communicating, using a user interface, a warning message to an operator of the vehicle. In such a case, each of the step of activating a limitation of allowable power supply from the powertrain to the power take-off and the step of communicating a warning message to an operator of the vehicle is performed when the energy storage device of the vehicle reaches the second state of charge threshold. In other words, each of these steps is performed when the energy storage device is discharged to the second state of charge threshold (or substantially immediately in case the second state of charge threshold has already been passed).

The above described step of activation of a limitation of allowable power supply from the powertrain to the power take-off when the second state of charge is reached is intended to inform/warn the operator that the state of charge of the energy storage device is approaching a critical state of charge for reaching the predefined charging station, the at least one nearest charging station, or the geographical position at which the vehicle may be driven using an energy source other than the energy storage device (whichever alternative is applicable under the particular circumstances). A limitation of allowable power supply to the power take-off will inherently limit the available power for the auxiliary power consumer. Thus, the operator will notice that the auxiliary power consumer will be, for example, slower or weaker. Still, the operator is not prevented from continuing to power the auxiliary power consumer using the power take-off, and may therefore plan when to interrupt the work. For said reason, the limitation of allowable power supply from the powertrain to the power take-off needs to be performed at a higher state of charge threshold than the first state of charge threshold since the latter is critical for the vehicle to reach for example the relevant charging station. Activation of a limitation of allowable power supply from the powertrain to the power take-off also has the advantage of prolonging the time until the energy storage device of the vehicle may reach the first state of charge threshold.

Furthermore, as evident from the disclosure above, the step of activating a limitation of allowable power supply from the powertrain to the power take-off may be replaced by, or supplemented with, a step of communicating a warning message to an operator of the vehicle. Such a communication may be performed using any previously known user interface configured to communicate with an operator of the vehicle. Examples of such user interfaces include visual presentation means (such as a display or the like) and/or audio presentation means (such as a speaker). A user interface device arranged inside the vehicle may be used, such as a display on the vehicle's dashboard or a speaker in a driver compartment of the vehicle. Alternatively or additionally, the user interface may be embodied by an application in a mobile device, such as a mobile phone or a personal digital assistant (PDA) device. It is also plausible that the user interface is comprised in a for example a display and/or a speaker arranged on the outside of the vehicle. Preferably, the user interface is at least comprised in a mobile device and/or any presentation means (such as a display and/or speaker) arranged on the outside of the vehicle. The reason therefore is to allow communication to an operator of the vehicle that may be present outside of the vehicle when operating the power take-off.

Alternatively, or additionally, to the above described steps performed when energy storage device reaches the second state of charge threshold, the method may comprise a step of interrupting power supply from the powertrain to the power take-off. Said step is performed when the state of charge of the energy storage device reaches the first state of charge threshold. Interrupting power supply to the power take-off inherently means that an auxiliary device connected thereto will not be powered. Therefore, said step should not be performed until the energy storage device has reached a state of charge which is critical for the vehicle to reach a predefined charging station, at least one nearest charging station, or a geographical position at which the vehicle may be driven using an energy source other than the energy storage device (whichever alternative is applicable under the specific conditions). Moreover, like the above described steps of activating a limitation of allowable power supply from the powertrain to the power take-off and/or communicating a warning message to the operator of the vehicle when the optional second state of charge threshold is reached, the step of interrupting power supply from the powertrain to the power take-off when the first state of charge threshold is reached is only performed in case the optional third state of charge threshold is not applied to the method.

It should here be noted that the method may naturally further comprise a step of communicating an information or warning message to an operator of the vehicle when the energy storage device reaches the first state of charge threshold. Thereby, the likelihood that the operator correctly understands the reason for the interruption of power supply to the power take-off may be increased. Like the previously described warning message communicated when the energy storage device reaches the optional second state of charge threshold, any one of the above exemplified user interfaces may be used for said purpose.

As previously mentioned, the herein described method may optionally also take into account a third state of charge threshold which is selected by the operator of the vehicle. Thereby, the operator may freely select a state of charge threshold that the operator considers to be appropriate and still take advantage of the benefits of the herein described method. In case the operator has freely selected a state of charge threshold, said state of charge threshold should be applied such that any actions that may otherwise be performed when the energy storage device reaches the optional second state of charge threshold and/or the first state of charge threshold are inhibited.

Therefore, the method may comprise a step of, in response to a user-initiated request for a third state of charge threshold, activating said third state of charge threshold so that it is applied when the herein described method is executed. In such a case, the method further comprises a step of, when the state of charge of the energy storage device reaches said third state of charge threshold, either (i) interrupting power supply from the powertrain (2) to the power take-off, or (ii) activating a limitation of allowable power supply from the powertrain (2) to the power take-off. Alternatively, or additionally, the method may comprise a step of communicating, using the user interface, a warning message to the operator of the vehicle when the third state of charge threshold is reached by the energy storage device.

The herein described method is particularly advantageous in situations where the power take-off is operated while the vehicle is at standstill. This is because in such situations, it may be very difficult for a vehicle manufacturer to predict the power consumption of the power take-off from the vehicle powertrain. In contrast, in case of the vehicle being in motion, the operation of a power take-off may sometimes be sensed indirectly in view of resulting in an energy consumption of the vehicle which is higher than the expected energy consumption of the vehicle during driving. Moreover, many auxiliary devices may be operated only when the vehicle is at standstill. For example, a crane of a timber truck is only operated during loading of timber onto the truck. Similarly, a suction pump for suction of sludge or the like into a container of the vehicle is only operated at the relevant site where the sludge is present. Furthermore, it may be very difficult for an operator of the vehicle, working outside of the vehicle when operating an auxiliary device connected to the PTO, to determine when to interrupt the PTO work in order to still allow the vehicle to reach a charging station or a geographical position where an energy source other than the energy storage device may be used for driving the vehicle. For example, even in case an estimated distance to empty would be displayed in the driver cabin using the instrument cluster of the vehicle, an operator loading timber onto a timber truck would have to interrupt the work and leave the crane cabin to check the information displayed in the driver cabin of the vehicle. Thus, according to one embodiment of the herein described method, the method is performed while the vehicle is at standstill.

The above described step of determining the first state of charge threshold is performed taking into account map data as previously mentioned. Such map data may typically comprise at least routing data, typographic data, geographical positions of charging stations, geographical areas associated with specific regulations (such as environmental regulations), etc., and often further data relating to for example speed limits and the like. Usage of map data for e.g., estimating future energy consumption during driving and/or selecting driving strategies is as such previously known and will therefore not be described in detail herein. However, map data may for example be used when performing computer simulations for determining future energy consumption of the vehicle.

Moreover, in view of the fact that the energy consumption of the vehicle during driving is dependent on the weight of the vehicle itself as well as the weight of the load, the first state of charge threshold is suitably determined taking into account the load of the vehicle. It should here be noted that the load of the vehicle may change in conjunction with operation of a power take-off. For example, loading timber onto a timber truck using a crane will inherently increase the load of the vehicle. Moreover, pouring concrete from a concrete truck at a construction site will inherently reduce the load of the vehicle. These changes will affect the energy consumption as the vehicle travels towards, for example, a charging station. Therefore, the determination of the first state of charge threshold may suitably be performed taking into account a predicted future vehicle load (at least in case the future vehicle load may be sufficiently accurately predicted). Alternatively, the determination of the first state of charge threshold may be performed taking into account a predefined maximum allowable vehicle load. The latter may be appropriate when the future load of the vehicle (as the vehicle travels towards e.g. a charging station after completion of the PTO work) may not be sufficiently accurately predicted. Taking into account the predefined maximum allowable vehicle load has the advantage of ensuring that the first state of charge threshold is not underestimated. However, using a predicted future load of the vehicle when determining the first state of charge threshold may in some cases enable a longer use of the power take-off before the operator may have to drive to e.g., a charging station. It should however here be noted that for some types of vehicles where the load is not expected to change as a result of the usage of the PTO, a current load of the vehicle may be used when determining the first state of charge threshold.

The herein described method may further comprise a step of, when the power take-off is activated, predicting a duration of possible use of the power take-off until the state of charge of the energy storage device reaches the first state of charge threshold, the optional second state of charge threshold, and/or the optional third state of charge threshold. In such a case, the method may further comprise a step of communicating, using the user interface, the predicted duration of possible use to the operator of the vehicle. This may further assist the operator to obtain a better understanding of when the PTO work may need to be interrupted to allow the vehicle to reach a predefined charging station, at least one nearest charging station, or a geographical position at which the vehicle may be driven using an energy source other than the energy storage device (whichever alternative is applicable under the given conditions).

The performance of the herein described method for controlling a vehicle in conjunction with usage of a power take-off of the vehicle may be governed by programmed instructions. These programmed instructions may take the form of a computer program which, when executed by a computer, cause the computer to effect desired forms of control action. Such a computer may be comprised in the control arrangement as described herein. A computer is in the present disclosure considered to mean any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner.

The above described programmed instructions, which may take the form of a computer program, may be stored on a computer-readable medium. Hence, the present disclosure also relates to a computer-readable medium storing instructions, which when executed by computer, cause the computer to carry out the herein described method for controlling a vehicle in conjunction with usage of a power take-off of the vehicle. The computer-readable medium may be a non-transitory computer-readable medium, such as a tangible electronic, magnetic, optical, infrared, electromagnetic, and/or semiconductor system, apparatus, and/or device.

The present disclosure further relates to a control arrangement configured to control a vehicle in conjunction with usage of a power take-off of the vehicle. The control arrangement may be configured to perform any one of the steps of the method for controlling a vehicle in conjunction with usage of a power take-off of the vehicle as described above.

More specifically, in accordance with the present disclosure, a control arrangement configured to control a vehicle in conjunction with usage of a power take-off of the vehicle is provided. Said vehicle comprises a powertrain configured to provide motive power to one or more drive wheels of the vehicle and to power the power take-off, and an energy storage device configured to power the powertrain. The control arrangement is configured to determine a first state of charge threshold for the energy storage device based on map data, said first state of charge threshold corresponding to a minimum state of charge sufficient for the vehicle to reach a predefined charging station, at least one nearest charging station, or a geographical position at which the vehicle may be driven using an energy source other than the energy storage device. The control arrangement is optionally further configured to determine a second state of charge threshold based on the first state of charge threshold, said second state of charge threshold being higher than the first state of charge threshold . The control arrangement is further configured to, unless an optional third state of charge threshold is applied in response to a user-initiated request therefore, (i) activate a limitation of allowable power supply from the powertrain to the power take-off when a state of charge of the energy storage device reaches the optional second state of charge threshold, (ii) communicating, using a user interface, a warning message to an operator of the vehicle when a state of charge of the energy storage device reaches the optional second state of charge threshold, and/or (iii) interrupt power supply from the powertrain to the power take-off when the state of charge of the energy storage device reaches the first state of charge threshold.

The control arrangement may comprise one or more control units. In case of the control arrangement comprising a plurality of control units, each control unit may be configured to control a certain function/step or a certain function/step may be divided between more than one control units. The control arrangement may for example be a control arrangement of a powertrain of the vehicle. Alternatively, the control arrangement may be any other control arrangement of the vehicle but configured to communicate with the powertrain for the purpose of performing the herein described method.

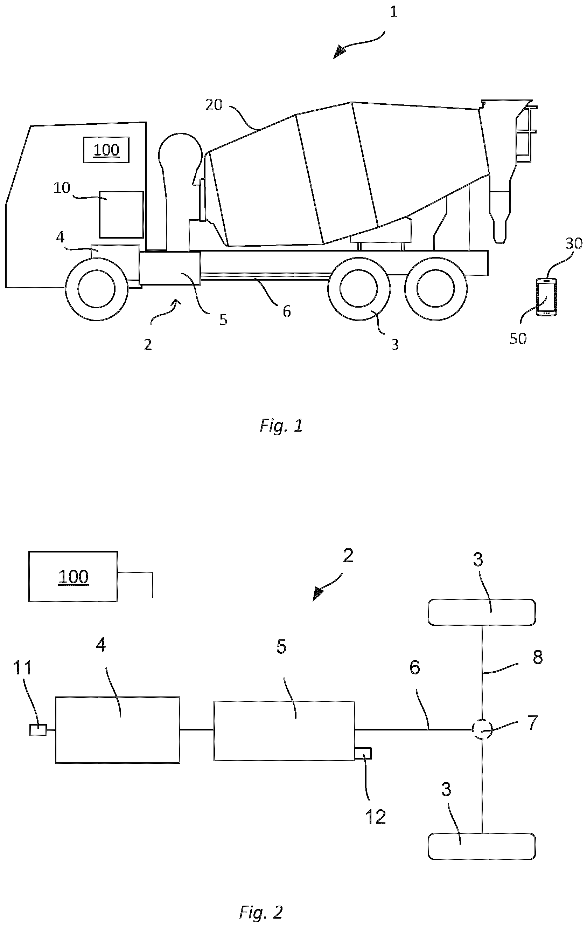

Figure 1 schematically illustrates a first example of a vehicle 1, here illustrated as a concrete truck. The vehicle 1 may be a battery electric vehicle. More specifically, the vehicle 1 may be a heavy-duty battery electric vehicle.

The exemplified vehicle 1 comprises a powertrain 2 configured to provide motive force to a plurality of drive wheels 3 of the vehicle 1. The drive wheels 3 may typically be evenly distributed on both sides of the vehicle, and thus only one of the drive wheels 3 is visible in the figure. The powertrain 2 of the exemplified vehicle 1 comprises an electrical machine 4, serving as a power unit of the vehicle 1. The powertrain 2 further comprises a transmission arrangement 5 connected to the electrical machine 4. An output shaft 6 of the transmission arrangement 5 is in turn connected to the drive wheels 3, suitably via a differential and a drive shaft (cf. Figure 2). The transmission arrangement 5 may suitably comprise a multi-speed transmission unit. Thereby, propulsion torque from the electrical machine 4 may selectively be transmitted at different gear ratios to the drive wheels. The vehicle 1 further comprises an energy storage device 10 configured to power the electrical machine 4 and thus also the powertrain 2 as such.

The vehicle 1 is also equipped with an auxiliary device 20, which in the present case comprises a rotatable drum serving as a mixer for concrete. The auxiliary device 20 may be powered by the powertrain 2 of the vehicle 1 when connected thereto via a power take-off (cf. Fig. 2).

The vehicle 1 further comprises a control arrangement 100. The control arrangement 100 may for example be configured to control the powertrain 2 of the vehicle 1. The control arrangement 100 may further be configured to perform the herein described method for controlling a vehicle in conjunction with usage of a power take-off of the vehicle. The control arrangement 100 may be configured to communicate with an operator of the vehicle via a user interface 50. Such a user interface 50 may for example (at least partly) be incorporated into a mobile device 30, such as a PDA or a mobile phone.

Figure 2 schematically illustrates an example of a powertrain 2 of a vehicle, such as the vehicle 1 shown in Figure 1. The powertrain 2 is configured to provide power (either motive or braking power, depending on the driving situation) to a plurality of drive wheels 3 of the vehicle 1. Said drive wheels 3 are comprised in the powertrain 2.

The powertrain 2 comprises an electrical machine 4 serving as a power unit of the vehicle. The electrical machine 4 is connected to a transmission arrangement 5. Said transmission arrangement 5 may suitably be a multi-speed transmission arrangement, but is not limited thereto. An output shaft 6 of the transmission arrangement 5 is connected to a drive shaft 8, with its associated drive wheels 3, suitably via a differential 7. The drive shaft 8, the drive wheels 3 and the optional differential 7 are all constituent components of the powertrain 2.

One or more power take-offs may be connectable to the vehicle powertrain 2 so as to be powered by the powertrain 2. In the illustrated case, a first power take-off 11 is arranged at a shaft of the electrical machine 4. Moreover, a second power take-off 12 is arranged at a shaft of the transmission arrangement 5, for example a lay shaft (not shown) of the transmission arrangement 5.

The powertrain 2 may be controlled by a control arrangement 100 of the vehicle 1. Said control arrangement 100 may be configured to perform the herein described method for controlling a vehicle in conjunction with usage of a power take-off, such as any one of the first power take-off 11 and the second power take-off 12, of the vehicle.

It should here be noted that although not illustrated in Figure 2, the powertrain 2 may comprise further power units in addition to the electrical machine 4. For example, the powertrain 2 may comprise more than one electrical machine 4 and/or a combustion engine that may be selectively connected to the rest of the powertrain 2. Merely as an example, the powertrain 2 may thus have a configuration as described in SE 544 919 C2.

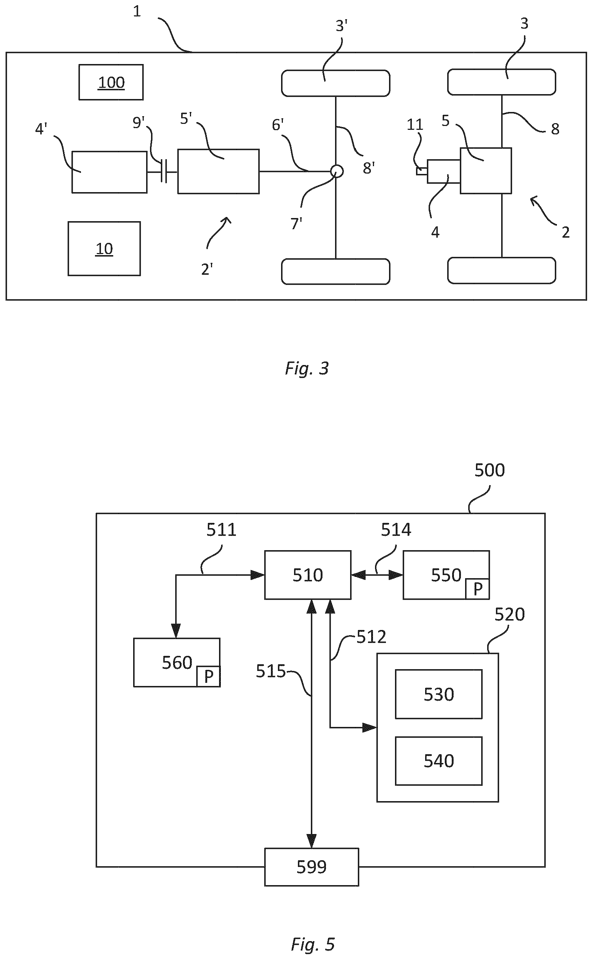

Figure 3 schematically illustrates a second example of a vehicle 1. Here, the vehicle 1 comprises a first powertrain 2 and a second powertrain 2'. The first and second powertrains 2, 2' are mechanically independent of each other and may therefore be controlled independently of each other. The presence of the mechanically independent powertrains 2, 2' allows the vehicle 1 to be driven using either one of the powertrains 2, 2' or using both powertrains 2, 2' simultaneously to meet a total motive power demand.

In the present example, the first powertrain 2 may be an electric drive axle (also known as an e-Axle). Thus, the first powertrain 2 comprises an electrical machine 4 connected to a transmission arrangement 5, which in turn is connected to a drive shaft 8 with its associated drive wheels 3. In contrast to in the powertrain 2 exemplified in Figure 2, electrical machine 4 and transmission arrangement 5 are arranged at the drive shaft 8. Thus, the powertrain 2 shown in Figure 3 may typically have a more compact design compared to the exemplified powertrain shown in Figure 2. The electrical machine 4 is powered by an energy storage device 10 of the vehicle 1.

The second powertrain 2' may be a traditional powertrain for a heavy-duty vehicle, and thus comprises a combustion engine 4'. The combustion engine 4' may be connected via a clutch 9' to a (second) transmission arrangement 5'. The (second) transmission arrangement 5' may for example be a conventional automated manual transmission (AMT), but is not limited thereto. An output shaft 6' of the (second) transmission arrangement 5' is connected to a (second) drive shaft 8', with its associated drive wheels 3', typically via a differential 7'.

As shown in the figure, the vehicle 1 comprises a power take-off 11 which is connectable to the first powertrain 2 of the vehicle 1. Thus, the power take-off 11 may be powered by the first powertrain 2. The vehicle 1 may naturally comprise further power take-offs, if desired. Such power take-offs may be arranged at any one of the first and second powertrains 2, 2'.

As shown in the figure, the vehicle 1 may further comprise a control arrangement 100. Said control arrangement 100 may be configured to perform the herein described method for controlling a vehicle in conjunction with usage of a power take-off of the vehicle 1.

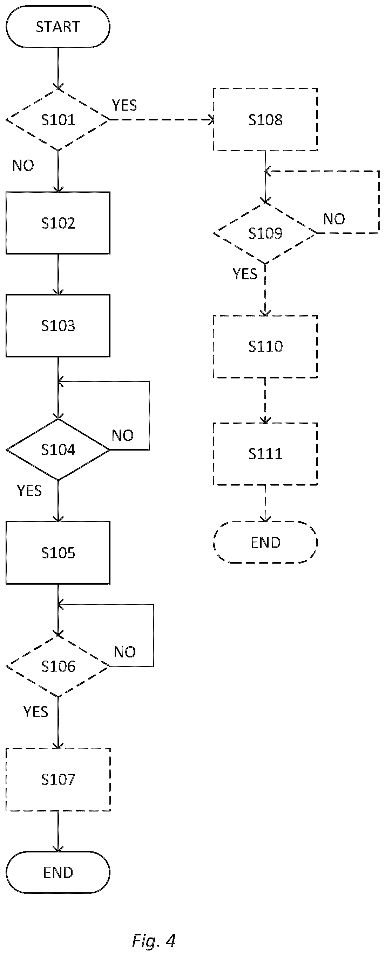

Figure 4 represents a flowchart schematically illustrating one exemplifying embodiment of the herein described method for controlling a vehicle in conjunction with usage of a power take-off of the vehicle. Optional steps of the exemplifying embodiment are illustrated using dashed lines. The method may be initiated upon a user-initiated request therefore and/or activation of a power take-off of the vehicle. The method may for example be performed while the vehicle is at standstill, but is not limited thereto.

The method may comprise a first step S101 of determining whether a user-initiated request for a third state of charge threshold has been generated. In case it is determined that a user-initiated request for a third state of charge threshold has not been generated, the method proceeds to step S102 described below. However, in case a user-initiated request for a third state of charge threshold has been generated, the method may proceed to a step S108.

The method comprises a step S102 of determining a first state of charge threshold based on map data. The first state of charge threshold corresponds to a minimum state of charge sufficient for the vehicle to reach (i.e. be driven to) either a predefined charging station, at least one nearest charging station, or a geographical position at which the vehicle may be driven using an energy source other than the energy storage device.

The method according to the exemplifying embodiment further comprises a step S103 of determining a second state of charge threshold based on the determined first state of charge threshold. Said second state of charge threshold is higher than the first state of charge threshold, but dependent thereof. For example, the second state of charge threshold may be 120% of the first state of charge threshold, or correspond to the first state of charge threshold plus 10% SOC.

After step S103, the method comprises a step S104 of determining whether the energy storage device of the vehicle has reached the second state of charge threshold. In other words, step S104 comprises determining whether the energy storage device has been discharged to the second state of charge threshold or lower. In case the energy storage device has not yet reached the second state of charge threshold, step S104 may be repeated as shown in the figure.

In case it is determined in step S104 that the energy storage device has reached the second state of charge threshold, the method proceeds to a step S105 of activating a limitation of allowable power supply from the powertrain to the power take-off. Step S105 may alternatively, or additionally, comprise communicating a warning message to an operator of the vehicle. Such a communication may be performed using a user interface configured therefore.

After step S105, the method may proceed to a step S106 of determining whether the energy storage device has reached the first state of charge threshold (as determined in step S102). In case the energy storage device has not yet reached the first state of charge threshold, step S106 may be repeated as shown in the figure.

In case it is determined in the optional step S106 that the energy storage device has reached the first state of charge threshold, the method may proceed to a step S107 of interrupting power supply from the powertrain to the power take-off. Thereby, the power take-off may no longer consume power from the powertrain and therefore not contribute to a further discharge of the energy storage device.

The method may be ended after step S107, as shown in the figure. In case of the method not comprising step S107, the method may instead be ended after step S105.

As previously mentioned, the method may comprise a step S101 of determining whether a user-initiated request for a third state of charge threshold has been generated. In case it is determined that such a request has been generated, the method may proceed to a step S108 of activating said third state of charge threshold such that it is applied when the herein described method is executed.

After step S108, the method may proceed to a step S109 of determining whether the third state of charge threshold has been reached. In other words, step S109 comprises determining whether the energy storage device has been discharged to the third state of charge threshold or lower. In case it is determined that the third state of charge threshold has not been reached, step S109 may be repeated as shown in the figure.

However, in case it is determined in step S109 that the third state of charge threshold has been reached, the method may proceed to a step S110 of communicating, using the user interface, a warning message to the operator of the vehicle. Alternatively, or additionally, the method may comprise a step S111 of activating a limitation of allowable power supply from the powertrain to the power take-off in case it is determined in step S109 that the third state of charge threshold has been reached.

It should here be noted that the herein described method for controlling a vehicle in conjunction with operation of a power take-off is not limited to the embodiment shown in Figure 4. For example, the method need not comprise step S103 since utilization of the second state of charge threshold is optional. In such a case, also steps S104 and S105 are not comprised in the method, but steps S106 and S107 would then be non-optional. Moreover, instead of step S111 in case it is determined in step S109 that the optional third state of charge threshold is reached, the method may comprise a step of interrupting power supply to from the powertrain to the power take-off (similar to step S107 but performed when the third state of charge threshold is reached).

Figure 5 schematically illustrates an exemplifying embodiment of a device 500. The control arrangement 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for controlling a vehicle in conjunction with usage of a power take-off of the vehicle. Said vehicle comprises a powertrain configured to provide motive power to one or more drive wheels of the vehicle and to power the power-take off. The vehicle further comprises an energy storage device configured to power the powertrain. The computer program comprises instructions for determining a first state of charge threshold for the energy storage device based on map data, said first state of charge threshold corresponding to a minimum state of charge sufficient for the vehicle to reach a predefined charging station, at least one nearest charging station, or a geographical position at which the vehicle may be driven using an energy source other than the energy storage device. The computer program may optionally further comprise instructions for determining a second state of charge threshold based on the first state of charge threshold, said second state of charge threshold being higher than the first state of charge threshold. The computer program further comprises instructions for, unless an optional third state of charge threshold is applied in response to a user-initiated request therefore, (1) activating a limitation of allowable power supply from the powertrain to the power take-off and/or communicating, using a user interface, a warning message to an operator of the vehicle when a state of charge of the energy storage device reaches the optional second state of charge threshold, and/or (2) interrupting power supply from the powertrain to the power take-off when the state of charge of the energy storage device reaches the first state of charge threshold.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510via a data bus 511. The read/write memory 550 is adapted to communicate with the data processing unit 510 via a data bus 514. The communication between the constituent components may be implemented by a communication link. A communication link may be a physical connection such as an optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be effected by the device 500 by means of the data processing unit 510 which runs the program stored in the memory 560 or the read/write memory 550. When the device 500 runs the program, methods herein described are executed.

## Claims

1. A method, performed by a control arrangement (100), for controlling a vehicle (1) in conjunction with usage of a power take-off (11, 12) of the vehicle (1),
said vehicle (1) comprising:
a powertrain (2) configured to provide motive power to one or more drive wheels (3) of the vehicle (1) and to power the power-take off, and
an energy storage device (10) configured to power the powertrain (2),
the method comprising:
- determining (S102) a first state of charge threshold for the energy storage device (10) based on map data, said first state of charge threshold corresponding to a minimum state of charge sufficient for the vehicle (1) to reach a predefined charging station, at least one nearest charging station, or a geographical position at which the vehicle (1) may be driven using an energy source other than the energy storage device (10), and
- optionally determining (S103) a second state of charge threshold based on the first state of charge threshold, said second state of charge threshold being higher than the first state of charge threshold,
wherein, unless an optional third state of charge threshold is applied in response to a user-initiated request therefore , the method further comprises:
- when a state of charge of the energy storage device (10) reaches the optional second state of charge threshold, activating (S105) a limitation of allowable power supply from the powertrain (2) to the power take-off (11, 12) and/or communicating, using a user interface (50), a warning message to an operator of the vehicle (1), and/or
- when the state of charge of the energy storage device (10) reaches the first state of charge threshold, interrupting (S107) power supply from the powertrain (2) to the power take-off (11, 12).

2. The method according to claim 1, further comprising:
in response to a user-initiated request for the optional third state of charge threshold, activating (S108) said third state of charge threshold, and
when the state of charge of the energy storage device (10) reaches said third state of charge threshold, either (i) interrupting power supply from the powertrain (2) to the power take-off (11, 12), or (ii) activating (S111) a limitation of allowable power supply from the powertrain (2) to the power take-off (11, 12) and/or communicating (S110), using the user interface (50), a warning message to the operator of the vehicle (1).

3. The method according to any one of claims 1 or 2, wherein the determination of the first state of charge threshold is performed taking into account a predicted future vehicle load or a predefined maximum allowable vehicle load.

4. The method according to any one of the preceding claims, wherein the method is performed while the vehicle (1) is at standstill.

5. The method according to any one of the preceding claims, wherein the method is performed in response to a user-initiated request therefore.

6. The method according to any one of the preceding claims, further comprising:
when the power take-off (11, 12) is activated, predicting a duration of possible use of the power take-off (11, 12) until the state of charge of the energy storage device (10) reaches the first state of charge threshold, the optional second state of charge threshold, and/or the optional third state of charge threshold, and
communicating, using the user interface (50), the predicted duration(s) of possible use to the operator of the vehicle (1).

7. A control arrangement (100) configured to control a vehicle (1) in conjunction with usage of a power take-off (11, 12) of the vehicle (1),
said vehicle (1) comprising:
a powertrain (2) configured to provide motive power to one or more drive wheels of the vehicle (1) and to power the power-take off, and
an energy storage device (10) configured to power the powertrain (2),
the control arrangement (100) being configured to:
- determine a first state of charge threshold for the energy storage device (10) based on map data, said first state of charge threshold corresponding to a minimum state of charge sufficient for the vehicle (1) to reach a predefined charging station, at least one nearest charging station, or a geographical position at which the vehicle (1) may be driven using an energy source other than the energy storage device (10), and
- optionally, determine a second state of charge threshold based on the first state of charge threshold, said second state of charge threshold being higher than the first state of charge threshold,
the control arrangement (100) further being configured to, unless an optional third state of charge threshold is applied in response to a user-initiated request therefore:
- activate a limitation of allowable power supply from the powertrain (2) to the power take-off (11, 12) when a state of charge of the energy storage device (10) reaches the optional second state of charge threshold,
- communicating, using a user interface (50), a warning message to an operator of the vehicle (1) when a state of charge of the energy storage device (10) reaches the optional second state of charge threshold, and/or
- interrupt power supply from the powertrain (2) to the power take-off (11, 12) when the state of charge of the energy storage device (10) reaches the first state of charge threshold.

8. The control arrangement (100) according to claim 7, wherein the control arrangement (100) is further configured to:
in response to a user-initiated request for the optional third state of charge threshold, activate said third state of charge threshold, and
when the state of charge of the energy storage device (10) reaches said third state of charge threshold, either (i) interrupt power supply from the powertrain (2) to the power take-off (11, 12), or (ii) active a limitation of allowable power supply from the powertrain (2) to the power take-off (11, 12) and/or communicate, using the user interface (50), a warning message to the operator of the vehicle (1).

9. The control arrangement (100) according to any one of claims 7 or 8, wherein the control arrangement (100) is configured to determine the first state of charge threshold taking into account a predicted future vehicle (1) load or a predefined maximum allowable vehicle load.

10. The control arrangement (100) according to any one of claims 7 to 9, wherein the control arrangement (100) is further configured to:
when the power take-off (11, 12) is activated, predict a duration of possible use of the power take-off (11, 12) until the state of charge of the energy storage device (10) reaches the first state of charge threshold, the optional second state of charge threshold, and/or the optional third state of charge threshold, and
communicate, using the user interface (50), the predicted duration of possible use to the operator of the vehicle (1).

11. A computer program comprising instructions which, when executed by a control arrangement (100) according to any one of claims 7 to 10, cause the control arrangement (100) to carry out the method according to any one of claims 1 to 6.

12. A computer-readable medium having stored thereon a computer program according to claim 11.

13. A vehicle (1) comprising:
a first powertrain (2), said first powertrain (2) being configured to provide motive power to one or more drive wheels (3) of the vehicle (1),
an energy storage device (10) configured to power the first powertrain (2),
a power take-off (11, 12) configured to be powered by the first powertrain (2), and
the control arrangement (100) according to any one of claims 7 to 10.

14. The vehicle (1) according to claim 13, wherein the vehicle (1) is a battery electric vehicle.

15. The vehicle (1) according to claim 13, wherein the vehicle (1) further comprises a second powertrain )2') configured to provide motive power to one or more drive wheels (3') of the vehicle (1), said second powertrain (2') being mechanically separated from the first powertrain (2) and being configured to be powered by an energy source other than the energy storage device (10).
